Europäisches Patentamt

European Patent Office

Office européen des brevets

(19)

(11) Publication number : 0 442 205 A2

(12) # EUROPEAN PATENT APPLICATION

(21) Application number : 90313409.6

(51) Int. Cl.$^5$ : G01N 31/00

(22) Date of filing : 11.12.90

(30) Priority : 25.01.90 US 469973

(43) Date of publication of application :
21.08.91 Bulletin 91/34

(84) Designated Contracting States :
BE CH ES FR GB IT LI

(71) Applicant : WESTINGHOUSE ELECTRIC
CORPORATION
Westinghouse Building Gateway Center
Pittsburgh Pennsylvania 15222 (US)

(72) Inventor : Peterson, Steven Harold
4970 Northlawn Drive
Murrysville, PA 15668 (US)
Inventor : Fero, Arnold Hill
RD 2, Box 374, Leechburg Rd.
New Kensington, PA 15068 (US)
Inventor : Burgman, Herbert Andrew
3583 Foxwood Drive
Murrysville, PA 15668 (US)
Inventor : Schreiber, Roger Blaine
7 Mellon Road
Export, PA 15632 (US)

(74) Representative : van Berlyn, Ronald Gilbert
23, Centre Heights
London, NW3 6JG (GB)

(54) Method for monitoring the effects of thermal and radiation exposure.

(57)    A method of monitoring the effects of thermal and radiation energy on electrical and structural materials is provided which involves measuring the progress of a model chemical reaction system. The reaction system is selected using the Arrhenius reaction rate law, which relates the rate of a reaction to its activation energy and temperature exposure. The particular chemical reaction system employed is selected to be compatible with the approximate exposure conditions expected and the duration of time between measurements.

# METHOD FOR MONITORING THE EFFECTS OF THERMAL AND RADIATION EXPOSURE

This invention relates to monitoring the effects of thermal and radiation energy on electrical and structural materials and, more particularly, to employing the Arrhenius rate law in selecting chemical compounds having well-known properties for use in such monitoring.

A wide variety of materials decompose when exposed to thermal and radiation energy. Such exposure often results in the decomposition of many components commonly found in structures such as factories, power plants, and heavy machinery. For example, it is known that the structural and electrical properties of organic materials found in the insulation and seals used in nuclear power plants are adversely influenced by thermal and radiation energy.

Thus, in order to assure the safety and operating capabilities of structures comprising these and other types of energy-sensitive materials, it becomes necessary to continuously monitor the condition of suspect components. Such monitoring, however, commonly presents a number of difficulties. In many cases, the on-going nature of a plant operation compromises the frequency of inspection programs. For example, the radioactive environment of an active nuclear power plant renders inspection of certain of its components impossible. Even during reactor down time, such inspection is not without considerable complication.

Even under the best of conditions, individual inspection of each suspect component in a large structure such as a power plant would entail great expense, both in terms of time and manpower. One way of obviating the expense of inspecting every component in such a structure would be to inspect only a sample group of certain, carefully chosen components ; the condition of the components actually tested could be assumed to in some way reflect that of the uninspected components. However, selective inspection of this sort would still entail considerable expense. In addition, the reliability of selective inspection would be dependent upon the extent to which the thermal and radiation history of the sample group represents that of all of the components. Where there exists great variance in the conditions to which the components have been exposed, questionable decomposition data will understandably be derived.

In light of the problems associated with actual testing of some or all of a given structure's energy-sensitive components, an accurate method for estimating the thermal and radiation decomposition of such components would be of great advantage.

It is an object of this invention to provide a method for accurately determining the electrical and structural properties of materials exposed to thermal and radiation energy. It is another object of this invention to provide a method for accurately determining the extent to which such materials have decomposed. It is yet another object of this invention to provide a method by which these determinations might be made without individual inspection of every material so exposed. It is a further object of this invention to provide a method for monitoring the total thermal and radiation energy to which these components are exposed.

Accordingly, this invention provides a simple, expedient method for monitoring the exposure of materials in various environments to thermal and radiation energy using the Arrhenius rate law. In preferred embodiments, said method comprises identifying a particular material to be monitored, determining an appropriate monitoring interval, and using the Arrhenius rate law to select a chemical compound which behaves in a well-known manner upon exposure to thermal and radiation energy and which will undergo measurable reaction in the subject environment over the chosen interval. The method of this invention further comprises providing the chemical compound in the subject environment, measuring the extent of its reaction after said interval, and comparing this measurement with calibration data to determine the properties of materials exposed sharing the same environment as the selected chemical compound.

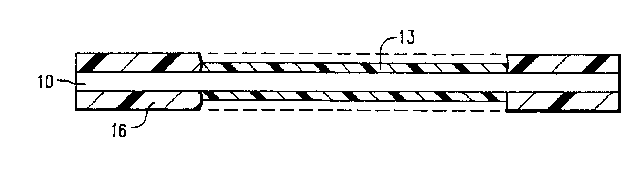

Figure 1 is an embodiment of a monitoring device for use in the method of the present invention, in which a fiber optic core (10) is coated with an activated polymer (13) and protective material (16).

The progress of most chemical reactions, including those which underlie changes in the electrical and structural properties of organic materials exposed to thermal and radiation energy, generally follow the Arrhenius rate law for first order or pseudo first order reactions.

The Arrhenius rate law is given in Equation (1), where $j$ is the rate constant for a chemical reaction with activation energy $E_a$.

$$j = Ae^{-E_a/kT} \quad (1)$$

$T$ is the temperature (°K) and $k$ is the Boltzmann constant. The term $A$ is called the pre-exponential factor, which is characteristic of a given reaction and is independent of temperature.

Where one knows the approximate ambient conditions to which a particular material will be exposed, the Arrhenius rate law can be used in accordance with this invention to select an appropriate chemical compound to employ in monitoring that material's thermal and radiation exposure. Consider a species X reacting to form a species Y. The kinetic equation for that reaction is shown in Equation (2).

$$d[X]/d[t] = -j[X] = -Ae^{-E_a/kT}[X] \quad (2)$$

As known in the art, this equation can be integrated if the temperature is known as a function of time. For example, after time = h at constant temperature T, the proportion of remaining reactant is given by Equation (3), where $X_0$ is the starting quantity of species X and back reactions are ignored.

$$\ln ([X]/[X]_0) = -Ae^{-Ea/kT} \text{ (h)} \quad (3)$$

Using Equation (3), then, one skilled in the art can estimate the appropriate parameters for a model reaction to be employed at the ambient conditions to which specific energy-sensitive materials are anticipated to be exposed. For example, to monitor materials used in a nuclear power plant, T might be chosen as 82°C (355K) to correspond to temperatures there encountered. To assure measurable reaction progress between measurements, the desired reaction should ideally have a half life comparable to the duration of a fuel cycle, or about two years, at which point the term $[X]/[X_0]$ in Equation (3) would equal one (1). Upon review of Equation (3), those of skill in the art will appreciate that the reaction employed to monitor exposure to thermal and radiation energy under these conditions should have an activation energy ($E_a$) of about 33 kcal/mole.

Because of the manner in which any chemical reaction's progress varies with temperature, there exist certain temperature ranges within which a given chemical compound can provide useful information in accordance with this invention. For example, when the progress of a reaction having an activation energy of 33 kcal/mole is plotted against temperature, it becomes apparent to those of skill in the art that the temperature range over which measurable information can be extracted from the compound's behavior is from about 47°C (320K) to about 67°C (340K).

Because the temperature range over which such measurable data can be obtained is somewhat characteristic of a given chemical compound, where temperature fluctuation is anticipated for an environment having energy-sensitive materials, the use of several chemical compounds selected in accordance with this invention is preferred. As will be appreciated by those skilled in the art, these compounds should have slightly different activation energies, such that at least one of the compounds will not fully react over the chosen interval. Measurable data can then likely be derived from those reactions which have not fully reacted.

A wide variety of chemical compounds might be used in accordance with this invention, so long as they undergo a measurable amount of progress under the conditions anticipated. Suitable reactions include the thermal decomposition of a chemical or an isomerization, such as the trans to cis conversion of stilbene. It is preferred that such reactions be irreversible, as where chemical decomposition generates a gaseous product.

In preferred embodiments of this invention, once a chemical compound is selected as appropriate for a given environment, calibration data is obtained by comparing the behavior over time of the chemical compound and one or more materials of interest after exposure to thermal and radiation energy. Calibration data can be obtained through a wide variety of techniques well known in the art, such as accelerated exposure studies comparing, for example, the structural integrity of gasket material with the infrared spectra of a chemical compound selected in accordance with this invention. Using such calibration data, it then becomes possible to determine the properties of a wide variety of materials in a particular exposure environment without time-consuming individual inspection. The progress of the selected, similarly exposed chemical compound is all that need be monitored.

As will be apparent to those of skill in the art, embodiments of this invention can take a number of forms. In one embodiment, a chemically reactive species having appropriate activation energy is chemically bonded to a polymer support, such as polyvinylchloride, polyethylene, polyester, or epoxy, to form a thermally activated polymer. A thin film (1-10 micrometers) of this thermally activated polymer is coated on an optical substrate, such as an optical fiber or the internal reflection rod of the Circle Cell (made by Spectra-Tech, Inc.). The coating should be on the optically transmitting part of the substrate, such as on the fiber optic core. The extent of reaction can be determined by passing light through the sensor and recording its spectrum. Spectral changes will be observed as the reaction proceeds, and can be interpreted in terms of the amount of starting material remaining and the amount of product formed. A wide variety of techniques well known in the art can be employed to measure such spectral changes, such as ultraviolet, visible, infrared, fluorescence, absorption, polarization, and nuclear magnetic resonance spectroscopies.

Another embodiment of this invention comprises a small vessel containing a liquid solution of the chemical species to be used. A wide variety of optical properties can be used to characterize such a system, including but not limited to absorption, fluorescence, and polarization. Fiber optics can be used to illuminate the sample and to determine its spectral characteristics and, in turn, the model reaction's progress.

Should it prove desirable in embodiments of this invention to prevent thermal neutrons from reacting with a chemical reagent, a thin protective coating of gadolinium or a gadolinium alloy could be used to absorb such neutrons before they can react with the reagent, as well known in the art.

Additional objects, advantages, and novel features of this invention will become apparent to those skilled in the art upon examination of the following example thereof.

EXAMPLE 1

The containment area of a nuclear reactor is identified as an environment to be monitored. Since the reactor must be shut down at least every two years for replacement of its fuel, two years is chosen as a convenient interval for monitoring the thermal and radiation exposure of the its components.

It is next determined that the chemical compound selected for exposure proceed approximately 50% toward completion over this interval so that measurable data can be derived. The temperature of the containment area over this interval is anticipated to be 82°C. Using the foregoing facts and Equation (3), it is calculated that chemical compounds placed in this environment should have activation energy of about 33 Kcal/mole. A chemical compound which decomposes to liberate a gas and which has an activation energy of 33 Kcal/mole is reacted with a portion of polyvinyl chloride under conditions suitable to bind the moieties. As shown in Figure 1, an approximately 5.0 micrometer film (13) of the resultant polymer is then coated onto two zinc selenide optical rods (10) (SpectraTech, Inc.). The initial spectra of the polymer films are then recorded using a Circle Cell attachment for an infrared spectrometer. A protective clear plastic coating (16) is then applied to the polymer-coated rods.

One of the rods is then placed in an accelerated aging chamber along with a sample of gasket material used in nuclear reactors. The chamber is maintained in such manner as to simulate a reactor containment area. The rod and sample are periodically removed from the chamber. The infrared spectrum of the polymer film and the structural properties of the sample are compared and recorded, yielding calibration data.

The second rod is then placed in the nuclear reactor containment area for about two years. Temperature is monitored and found to be about 82°C. The rod is taken from the containment area and the infrared spectrum of the polymer film is recorded. The changes in the spectra are evaluated by comparison to calibration data to determine the structural properties of gasket materials located near the rod in the containment area.

**Claims**

1.  A method of monitoring the effects of thermal energy on electrical, structural or other pre-selected physical property of a preselected material in an environment having thermal energy comprising the steps of :

    determining an interval over which said material is to be monitored ;

    using the Arrhenius rate law to select at least one chemical compound which will react measurably when exposed to thermal energy in said environment over said interval ;

    providing the chemical compound in said environment ;

    measuring the extent to which the chemical compound reacts after said interval ; and

    determining the preselected physical property of said material after exposure to thermal energy over said interval by comparing the extent to which the chemical compound reacts with calibration data relating said extent of reaction to the preselected physical property of said material.

2.  The method of claim 1 comprising providing a chemical compound which undergoes a decomposition reaction upon exposure to thermal energy.

3.  The method of claim 1 comprising providing a chemical compound which undergoes an isomerization reaction upon exposure to thermal energy.

4.  The method of claim 1 further comprising chemically binding the chemical compound to a polymer support before providing the chemical compound in said environment.

5.  The method of claim 1 further comprising dissolving the chemical compound in a solvent before providing the chemical compound in said environment.

6.  The method of claim 1 further comprising providing the chemical compound on an optical substrate.

7.  The method of claim 1 further comprising providing the chemical compound on an optical fiber.

8.  The method of claim 1 further comprising providing the chemical compound on the internal reflection rod of a Circle Cell.

9.  The method of claim 1 further comprising providing the chemical compound as a solution contained in a vessel.

10. The method of claim 1 further comprising measuring the extent to which the chemical compound react using spectroscopy.

11. A method for producing calibration data for use in monitoring the effects of thermal energy on electrical, structural or other preselected physical property of a preselected material in an environment having thermal energy comprising the steps of :

determining an interval over which said material is to be monitored ; and

using the Arrhenius rate law to select at least one chemical compound which will react measurably when exposed to thermal energy in said environment over said interval ;

exposing the material and the chemical compound to thermal energy ; and

periodically recording the extent to which the chemical compound reacts and the preselected physical property of the material.

12. The method of Claim 11 further comprising identifying a material to be monitored in a nuclear reactor.

13. A method of monitoring the effects of radiation energy on electrical, structural or other preselected physical property of a preselected material in an environment having radiation energy comprising the steps of :

determining an interval over which said material is to be monitored ;

using the Arrhenius rate law to select at least one chemical compound which will react measurably when exposed to radiation energy in said environment over said interval ;

providing the chemical compound in said environment ;

measuring the extent to which the chemical compound reacts after said interval ; and

determining the preselected physical property of said material after exposure to radiation energy over said interval by comparing the extent to which the chemical compound reacts with calibration data relating said extent of reaction to the preselected physical property of said material.

14. The method of claim 13 further comprising providing a chemical compound which undergoes a decomposition reaction upon exposure to radiation energy.

15. The method of claim 13 comprising providing a chemical compound which undergoes an isomerization reaction upon exposure to radiation energy.

16. The method of claim 13 further comprising chemically binding the chemical compound to a polymer support before providing the chemical compound in said environment.

17. The method of claim 13 further comprising dissolving the chemical compound in a solvent before providing the chemical compound in said environment.

18. The method of claim 13 further comprising providing the chemical compound on an optical substrate.

19. The method of claim 13 further comprising providing the chemical compound on an optical fiber.

20. The method of claim 13 further comprising providing the chemical compound on the internal reflection rod of a Circle Cell.

21. The method of claim 13 further comprising providing the chemical compound as a solution contained in a vessel.

22. The method of claim 13 further comprising measuring the extent to which the chemical compound react using spectroscopy.

23. A method for producing calibration data for use in monitoring the effects of radiation energy on electrical, structural or other preselected physical property of a preselected material in an environment having radiation energy comprising the steps of :

determining an interval over which said material is to be monitored ; and

using the Arrhenius rate law to select at least one chemical compound which will react measurably when exposed to radiation energy in said environment over said interval ;

exposing the material and the chemical compound to radiation energy ; and

periodically recording the extent to which the chemical compound reacts and the preselected physical property of the material.

24. The method of claim 23 further comprising identifying a material to be monitored in a nuclear reactor.